(19) Europäisches Patentamt

European Patent Office

Office européen des brevets

(11) **EP 0 851 380 B1**

(12) **FASCICULE DE BREVET EUROPEEN**

(45) Date de publication et mention
de la délivrance du brevet:
**15.05.2002 Bulletin 2002/20**

(51) Int Cl.⁷: **G06K 9/00**

(21) Numéro de dépôt: **97403160.1**

(22) Date de dépôt: **26.12.1997**

(54) **Capteur optique d'empreinte digitale**

Optischer Sensor für Fingerabdrücke

Optical sensor for fingerprints

(84) Etats contractants désignés:
**AT BE DE DK FI GB NL SE**

(30) Priorité: **27.12.1996 FR 9616128**
**21.05.1997 FR 9706171**
**10.06.1997 FR 9707159**

(43) Date de publication de la demande:
**01.07.1998 Bulletin 1998/27**

(73) Titulaire: **SAGEM SA**
**75116 Paris (FR)**

(72) Inventeurs:
• **Calmel, Maryline**
**92370 Chaville (FR)**
• **Euverte, Jean Michel**
**95490 Vaureal (FR)**

(74) Mandataire: **Bloch, Gérard**
**2, square de l'Avenue du Bois**
**75116 Paris (FR)**

(56) Documents cités:
**EP-A- 0 194 783**    **EP-A- 0 685 814**
**WO-A-94/22371**      **US-A- 4 917 987**
**US-A- 5 233 404**    **US-A- 5 351 304**

# Description

L'invention concerne un système destiné à contrôler l'identité des personnes par la reconnaissance de leur empreinte digitale.

Un tel système peut être utilisé pour sécuriser l'accès à un lieu protégé, ou encore, à titre d'exemple, pour vérifier que le porteur d'une carte personnelle (d'identité, d'assuré social, etc.) en est bien titulaire.

L'identification d'une personne par reconnaissance de son empreinte digitale consiste à prendre une image de cette empreinte, à l'aide d'un capteur, généralement optique, capable de détecter par contraste le relief des creux et des bosses formés par les sillons à la surface du doigt et formant ce qui sera appelé par la suite empreinte digitale. L'image est ensuite traitée par traitement numérique d'image et peut être comparée à une base de données, associée au capteur, contenant une pluralité d'images d'empreinte digitale, stockées sous forme de données numériques, et respectivement associées aux identités des personnes autorisées à accéder au lieu protégé, pour reprendre cet exemple. En cas d'identité entre l'empreinte détectée et une empreinte de la base de données, l'accès est autorisé.

Dans le cas de l'utilisation d'une carte personnelle, à puce par exemple, on compare l'image d'empreinte détectée à une image stockée au préalable dans la puce de la carte, et correspondant à l'empreinte du titulaire de la carte.

Un capteur optique de détection d'empreinte digitale comprend généralement une caméra de type CCD (Charge Coupled Device) de prise de vues, un prisme, et une diode électroluminescente (LED) d'éclairage de l'empreinte.

Le prisme présente quatre faces fonctionnelles :

- une face objet de support d'empreinte digitale sur laquelle la personne à identifier doit poser son doigt;
- une face d'éclairage opposée et parallèle à la face objet, disposée au voisinage de la LED;
- une face d'observation, inclinée sur la face objet et la face d'éclairage, par laquelle la caméra CCD peut observer l'empreinte digitale sous un angle d'observation entre la direction d'observation et la normale à la face objet; et
- une face objet parasite, de couleur généralement noire, reliant la face objet et la face d'éclairage, observable conjointement avec l'empreinte digitale lors de la prise de vue, et faisant en fait office de fond de scène.

La source d'éclairage LED est disposée au voisinage de la face d'éclairage, et la caméra CCD au voisinage de la face d'observation, l'angle d'observation étant supérieur à un angle limite $\sigma_1$ au-dessus duquel on peut observer par contraste les bosses et les creux de l'empreinte digitale, et au-dessous duquel aucun contraste n'est observable. L'angle limite $\sigma_1$ est défini par la loi optique de Descartes.

Un tel capteur est connu, pas exemple, du document US-A-5 233 404.

La performance de tels capteurs dépend notamment de leur faible sensibilité à la lumière ambiante.

En effet, la lumière extérieure risque de rentrer dans le corps optique du fait de taches de gras, laissées sur la face objet support par des doigts qui polluent la face objet support, et font par conséquent disparaître l'angle limite. L'invention vise à résoudre ce problème.

A cet effet, l'invention concerne un capteur optique d'empreinte digitale comprenant des moyens de prise de vues, une source d'éclairage et un corps de transmission optique, avec un angle limite $\sigma_1$, laissant passer l'éclairage de la source et présentant une face support de l'empreinte digitale, le capteur étant caractérisé par le fait que les moyens de prise de vues, associés à des moyens de traitement d'image, et la source d'éclairage sont reliés à des moyens de synchronisation, les moyens de synchronisation étant agencés pour contrôler l'éclairage de la source avec des tops d'observation des moyens de prise de vues, afin de prendre alternativement une image de l'empreinte éclairée par la source et une image de l'empreinte non éclairée par la source, et les moyens de traitement d'image étant agencés pour soustraire les deux images d'empreinte l'une de l'autre afin d'obtenir une image de l'empreinte non soumise à l'éclairage ambiant.

De préférence, les moyens de prise de vues sont agencés pour fonctionner dans le proche infra-rouge.

Avantageusement, les moyens de prise de vues sont associés à des moyens pour adapter la bande spectrale de détection des moyens de prise de vues au spectre d'émission de la source impulsionnelle.

L'invention sera mieux comprise à l'aide de la description suivante d'une forme de réalisation préférée du capteur optique d'empreinte digitale de l'invention en référence au dessin annexé sur lequel :

- la figure 1 représente une vue schématique de la forme de réalisation préférée du capteur et
- la figure 2 représente un schéma de périodes d'éclairage et de périodes de prise de vues du capteur de la figure 1.

Dans l'exemple particulier de la description qui suit, le capteur d'empreinte digitale est disposé à une entrée d'un lieu protégé d'accès sécurisé, afin de contrôler l'identité des personnes souhaitant accéder au lieu protégé par reconnaissance de leur empreinte digitale. Le capteur est destiné à élaborer, pour chacune des personnes, une image de leur empreinte, afin de la comparer à une base de données 21 contenant une pluralité d'images numériques correspondant aux empreintes digitales de personnes autorisées à accéder au lieu protégé.

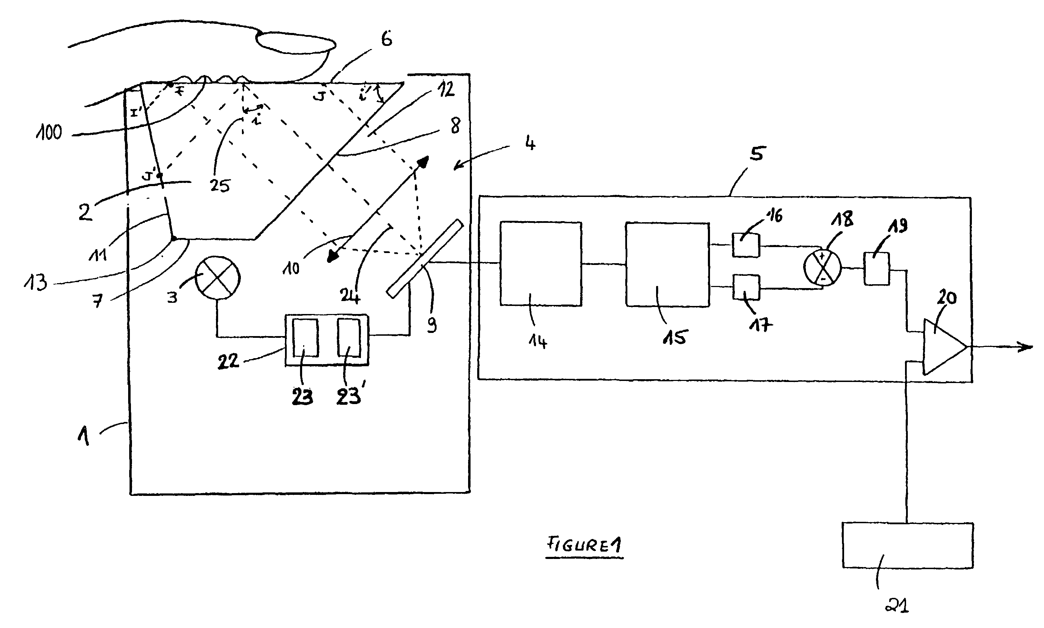

Le capteur d'empreinte digitale représenté sur la figure 1 comprend, dans un boîtier 1, un corps 2 de transmission optique, une source 3 d'éclairage de l'empreinte digitale 100, en l'espèce une diode électroluminescente (LED) destinée à émettre de la lumière dans le proche infra-rouge, et un dispositif 4 de prise de vues. Le dispositif 4 est associé à un dispositif 5 de traitement, ici numérique, d'image.

Le corps de transmission optique 2 présente ici une forme de polyèdre à six faces planes, et est constitué en un matériau laissant passer l'éclairage de la LED 3, en l'espèce un milieu transparent d'indice 1,5. On rappelle que l'air, constituant le milieu environnant le capteur d'empreinte et plus particulièrement le corps 2, est d'indice 1.

Le corps de transmission optique 2 présente une face objet 6 support d'empreinte digitale, polie, sur laquelle la personne à identifier doit poser son doigt, et une face d'éclairage 7 de réception de la lumière de la source 3, les faces objet support 6 et d'éclairage 7 étant ici en face l'une de l'autre et parallèles entre elles. La face d'éclairage 7 est dépolie afin d'uniformiser l'éclairage de l'empreinte à l'aide de la LED 3, et située au voisinage immédiat de la LED 3.

Une face d'observation 8 est disposée entre la face objet support 6 et le dispositif 4 de prise de vues, les vues étant prises à travers le corps de transmission optique 2. La face d'observation 8 est inclinée sur la face objet support 6, l'angle interne i' entre ces deux faces 8 et 6 étant sensiblement égal à un angle d'observation i explicité plus loin.

Le corps de transmission optique 2 comprend également une face objet parasite 11, de liaison entre la face objet support 6 et la face d'éclairage 7, opposée à la face d'observation 8. La face parasite 11 est inclinée sur la face support 6, l'angle interne entre les deux faces 11 et 6 étant ici de 78°. En outre, la face parasite est absorbante, et ici de couleur noire.

Le dispositif 4 de prise de vues comprend un capteur 9, en l'espèce un capteur CCD (Charge Coupled Device), de prise de vues, capable de fonctionner ici dans les longueurs d'onde proches de l'infrarouge, et associé à une optique de focalisation 10. Le capteur CCD pourrait également fonctionner dans le visible. Il pourrait aussi s'agir d'un capteur de type CMOS.

La direction d'observation du dispositif 4, autrement dit l'axe optique de focalisation 24, est ici sensiblement perpendiculaire à la face d'observation 8, en conséquence l'angle d'incidence de la direction d'observation 24 par rapport à la normale 25 à la face objet support 6 est l'angle d'observation i. Le dispositif 4 de prise de vues est destiné à observer l'empreinte digitale 100 par contraste entre les creux et les bosses formés par les sillons de l'empreinte 100. Le contraste n'est observable que dans les directions d'observation pour lesquelles les rayons lumineux d'observation sont totalement réfléchis sur la face objet support 6, côté interne.

Selon la loi optique de Descartes, les indices respectifs $n_1$ et $n_2$ du corps de transmission optique 2 et de l'air définissent un angle d'observation limite $\sigma_1$ de réflexion totale sur la face objet support 6, la réflexion étant totale sur la face support 6, côté interne, si l'angle d'observation i satisfait à la condition suivante :

$$(n_1/n_2). \sin i \geq 1,$$

sin i étant inférieur à 1, par définition.

Du respect de cette condition, il résulte un domaine angulaire d'observation du dispositif 4 de prise de vues, qui comprend les angles d'observation i tels que : $\sigma_1 \leq i \leq 90°$. Pour les indices $n_1$ (1,5) et $n_2$ (1) considérés, l'angle limite $\sigma_1$ est égal à 42°.

Dans ce domaine angulaire d'observation, le dispositif 4 de prise de vues peut observer par contraste le relief des creux et des bosses formés par les sillons de l'empreinte digitale, alors qu'il ne peut observer aucun contraste et ne peut donc pas distinguer les sillons de l'empreinte pour les angles d'observation i tels que $0 \leq i < \sigma_1$.

L'angle d'observation i du capteur d'empreinte est sensiblement égal mais supérieur à l'angle limite $\sigma_1$, afin d'observer les sillons de l'empreinte par contraste avec une distorsion minimale et une résolution optimale, et égal ici à 45°.

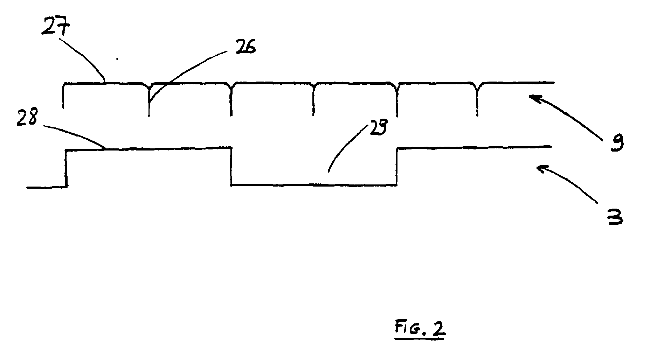

Le champ d'observation 12 du dispositif 4 de prise de vues couvre une zone utile de la face objet support 6, de largeur IJ dans le plan de coupe de la figure 2 (perpendiculaire à la face objet support 6), ainsi qu'une zone correspondante de la face objet parasite 11, de largeur I'J' dans le plan de la figure 2, observable par réflexion sur la face objet support 6. Ainsi, les deux faces support 6 et parasite 11 se trouvent dans le champ 12 observable par le dispositif 4.

La distance séparant la face objet support 6 et la face d'éclairage 7, autrement dit l'épaisseur du corps de transmission optique 2, satisfait aux deux conditions suivantes:

- l'arête 13 commune aux faces parasite 11 et d'éclairage 7 doit être située hors du champ 12 du dispositif 4 de prise de vues, afin de ne pas dégrader l'image de l'empreinte par superposition de l'image de l'arête 13, et
- l'épaisseur du corps de transmission optique 2 doit être minimale.

Les deux autres faces du corps de transmission optique 2 sont égales, parallèles entre elles et en face l'une de l'autre, et constituent deux côtes opposés du corps de transmission optique 2.

Le dispositif 5 de traitement numérique d'image, relié en entrée au capteur CCD 9 comprend:

- un bloc d'acquisition numérique 14 relié en entrée au capteur CCD 9 et destiné à transformer les signaux analogiques délivrés par le capteur CCD 9 en données numériques;

- un bloc 15 de traitement numérique d'image connecté en entrée à la sortie du bloc d'acquisition et en sortie à deux mémoires de travail 16, 17, et destiné à élaborer des images numériques d'empreinte, c'est-à-dire des images sous forme de données;
- un soustracteur 18 à deux entrées respectivement reliées aux deux mémoires de travail 16, 17 et à une sortie reliée à une autre mémoire de travail 19, et
- un comparateur 20 à deux entrées reliées respectivement à la mémoire de travail 19 de la sortie du soustracteur 18, et à une mémoire externe 21 contenant la basé de données des empreintes des personnes autorisées à accéder au lieu protégé, et à une sortie reliée à une commande d'autorisation d'accès non représentée.

Le capteur comprend également un dispositif de synchronisation 22 relié au capteur CCD 9 et à la source d'éclairage 3 pour contrôler l'éclairage de la source 3 avec des tops d'observation 26 du capteur CCD 9, comme cela sera décrit plus loin.

Après la description structurelle du capteur d'empreinte digitale, son fonctionnement va maintenant être décrit.

La personne à identifier ayant posé son doigt sur la face objet support 6, le dispositif 4 prend des vues du doigt.

En fonctionnement, le capteur CCD 9 prend donc des vues de l'empreinte digitale 100, pour obtenir des images ici réalisées sur deux trames d'observation 27, avec une fréquence d'image déterminée, en l'espèce 25 images par seconde, les trames 27 consécutives étant séparées les unes des autres par des tops d'observation 26. En sortie, le capteur CCD 9 délivre des signaux analogiques correspondant aux vues prises durant les trames d'observation 27.

En référence à la figure 2, le dispositif de synchronisation 22 contrôle l'éclairage de la LED 3 sous la commande des tops d'observation 26 du capteur CCD 9 et d'un signal de parité des trames, en commandant, alternativement et en continu, l'éclairage de la LED 3 (28) durant deux trames d'observation consécutives, l'arrêt de l'éclairage (29) durant les deux trames consécutives suivantes, puis à nouveau l'éclairage de la LED 3 durant deux trames, etc..

Le bloc d'acquisition 14 transforme les signaux analogiques délivrés par le capteur CCD 9 en données numériques correspondantes.

Le bloc 15 de traitement numérique d'image élabore une succession d'images de l'empreinte 100 à partir du flot de données délivré par le bloc d'acquisition 14 et à l'aide d'un algorithme de traitement de données. La succession d'images numériques comprend alternativement une image de l'empreinte 100 éclairée par la source 3 et une image de l'empreinte 100 non éclairée par la source 3, l'empreinte 100 étant dans tous les cas soumise à l'éclairage ambiant.

Le bloc 15 de traitement d'image mémorise sous forme numérique une image de l'empreinte éclairée par la LED 3 et une image de l'empreinte non éclairée par la LED 3, respectivement dans les deux mémoires de travail 16, 17. Puis le soustracteur 18 soustrait les deux images numériques l'une de l'autre, et l'image numérique résultante finale, représentant l'empreinte digitale 100 éclairée par la source 3 mais non soumise à l'éclairage ambiant, est stockée dans la mémoire de travail 19.

On soulignera que les signaux analogiques délivrés par le capteur CCD à partir des vues prises comprennent un signal utile représentant l'empreinte digitale 100, et un signal parasite superposé au signal utile et correspondant à la lumière parasite provenant de l'éclairage ambiant. L'amplitude du signal utile est généralement faible par rapport à l'amplitude du signal parasite. Afin d'obtenir un signal utile exploitable, d'amplitude suffisante, après soustraction du signal parasite, les signaux délivrés par le capteur CCD sont numérisés sur un nombre adapté de bits, ici sur 12 bits, le signal utile étant ainsi numérisé sur un nombre suffisant de bits.

Enfin, le comparateur 20 compare cette image numérique finale aux images numériques d'empreinte de la base de données 21, et en cas d'identité seulement transmet, en sortie, un signal d'autorisation d'accès à la commande d'accès, la personne à identifier étant reconnue, par son empreinte digitale, comme faisant partie de la base de données.

A la place de la base de données 21, on pourrait également envisager d'associer le capteur à un lecteur de carte personnelle à mémoire, à puce ou à bande magnétique par exemple, contenant l'image de l'empreinte digitale du titulaire de la carte personnelle.

Dans la description qui vient d'être faite, les moyens de prise de vues ont une large bande spectrale de détection.

Dans une autre forme de réalisation plus perfectionnée, les moyens de prise de vues, en l'espèce une matrice de détection CCD, sont associés à un filtre optique destiné à adapter la bande spectrale de détection au spectre d'émission de la source impulsionnelle.

La source impulsionnelle, ici une diode laser utilisée en mode flash, a un spectre d'émission continu concentré autour d'une longueur d'onde de 850 nm.

Le filtre optique est réalisé par dépôt, sur une plaque de verre, d'une pluralité de couches minces d'indices variables respectivement destinées à transmettre certaines longueurs d'ondes et à en réfléchir d'autres. Le filtre présente ainsi une bande spectrale passante centrée autour de 850 nm et large d'environ quelques dizaines de nanomètres. Le filtre est accolé à la matrice de détection pour éviter la réception d'énergie parasite.

En fonctionnement, la matrice de détection, associée à son filtre optique, ne détecte que les longueurs d'ondes situées dans la bande passante, et élimine ainsi toutes les longueurs d'ondes qui ne proviennent pas de la source impulsionnelle. De ce fait, les vues de l'empreinte digitale sont prises avec un minimum de bruit provenant de longueurs d'ondes inutiles.

On vient de décrire un capteur optique d'empreinte digitale comprenant un corps de transmission optique avec une face objet parasite 11 inclinée. Bien entendu, cet exemple particulier ne doit en aucun cas être considéré de manière limitative.

## Revendications

1. Capteur optique d'empreinte digitale comprenant des moyens (4) de prise de vues, une source d'éclairage (3) et un corps de transmission optique (2), avec un angle limite $\sigma_1$, laissant passer l'éclairage de la source et présentant une face (6) support de l'empreinte digitale (100), le capteur étant **caractérisé par le fait que** les moyens (4) de prise de vues, associés à des moyens (5) de traitement d'image, et la source d'éclairage (3) sont reliés à des moyens de synchronisation (22), les moyens de synchronisation (22) étant agencés pour contrôler l'éclairage de la source (3) avec des tops d'observation des moyens (4) de prise de vues, afin de prendre alternativement une image de l'empreinte éclairée par la source (3) et une image de l'empreinte non éclairée par la source (3), et les moyens (5) de traitement d'image étant agencés pour soustraire les deux images d'empreinte l'une de l'autre afin d'obtenir une image de l'empreinte non soumise à l'éclairage ambiant.

2. Capteur optique d'empreinte digitale selon la revendication 1, dans lequel les moyens (4) de prise de vues sont agencés pour fonctionner dans le proche infrarouge.

3. Capteur optique d'empreinte digitale selon l'une des revendications 1 et 2, dans lequel les moyens de prises de vues sont associés à des moyens pour adapter la bande spectrale de détection des moyens de prise de vues au spectre d'émission de la source impulsionnelle.

4. Capteur optique d'empreinte digitale selon l'une des revendications 1 à 3, dans lequel il est prévu des moyens pour numériser les signaux délivrés par les moyens de prise de vues sur un nombre adapté de bits afin d'obtenir des signaux utiles représentant l'empreinte numérisés sur un nombre suffisant de bits pour pouvoir être exploitables.

## Claims

1. Optical sensor for fingerprints, comprising image-taking means (4), a light source (3) and an optical transmission body (2), with a limit angle $\sigma_1$, allowing passage of the light from the source and having a support face (6) for the fingerprint (100), the sensor being **characterised in that** the image-taking means (4), associated with image processing means (5), and the light source (3) are connected to synchronisation means (22), the synchronisation means (22) being arranged to control the light from the source (3) with observation pulses of the image-taking means (4), in order alternately to take an image of the fingerprint illuminated by the source (3) and an image of the fingerprint not illuminated by the source (3), and the image processing means (5) being arranged to subtract the two fingerprint images from each other in order to obtain a fingerprint image not subjected to ambient illumination.

2. Optical sensor for fingerprints according to claim 1, wherein the image-taking means (4) are arranged to operate in near infrared.

3. Optical sensor for fingerprints according to one of claims 1 and 2, wherein the image-taking means are associated with means for adapting the detection spectral band of the image-taking means to the emission spectrum of the pulse source.

4. Optical sensor for fingerprints according to any one of claims 1 to 3, wherein means are provided for digitising the signals output by the image-taking means over a suitable number of bits to obtain useful signals representing the digitised fingerprint over a sufficient number of bits to be useable.

## Patentansprüche

1. Optischer Fingerabdrucksensor, umfassend Aufnahmeeinrichtungen (4), eine Lichtquelle (3) und einen optischen Übertragungskörper (2), mit einem Grenzwinkel $\sigma_1$, der das Licht der Quelle durchlässt und eine Auflagefläche (6) für den Fingerabdruck (100) aufweist, wobei der Sensor **dadurch gekennzeichnet ist, dass** die mit Bildbearbeitungseinrichtungen (5) angeschlossenen Aufnahmeeinrichtungen (4) und die Lichtquelle (3) mit Synchronisationseinrichtungen (22) verbunden sind, wobei die Synchronisationseinrichtungen (22) eingerichtet sind, um das Licht der Quelle (3) mit Aufnahmeimpulsen der Aufnahmeeinrichtungen (4) zu steuern, um abwechselnd ein Bild des von der Quelle (3) beleuchteten Fingerabdrucks und ein Bild des von der Quelle (3) nicht beleuchteten Fingerabdrucks zu machen, und wobei die Bildbearbeitungseinrichtungen (5) angeordnet sind, um die beiden Abdruckbilder voneinander abzuziehen, um ein Abdruckbild zu erhalten, das nicht vom Umgebungslicht abhängt.

2.  Optischer Fingerabdrucksensor nach Anspruch 1, bei dem die Aufnahmeeinrichtungen (4) eingerichtet sind, um im nahen Infrarotbereich zu arbeiten.

3.  Optischer Fingerabdrucksensor nach einem der Ansprüche 1 und 2, bei dem die Aufnahmeeinrichtungen zu Einrichtungen angeschlossen sind die das Erfassungsspektralband der Aufnahmeeinrichtungen an das Emissionsspektrum der Pulsquelle anpassen.

4.  Optischer Fingerabdrucksensor nach einem der Ansprüche 1 bis 3, bei dem Einrichtungen vorgesehen sind, um die von den Aufnahmeeinrichtungen abgegebenen Signale mit einer angepassten Bitanzahl zu digitalisieren, um Nutzsignale zu erhalten, die den digitalisierten Abdruck mit einer Bitanzahl darstellen, die ausreicht, um auswertbar sein zu können.

FIGURE 1

7

FIG. 2